(19) Europäisches Patentamt
European Patent Office
Office européen des brevets

(11) **EP 3 842 625 B1**

(12) **EUROPEAN PATENT SPECIFICATION**

(45) Date of publication and mention
of the grant of the patent:
**03.04.2024 Bulletin 2024/14**

(21) Application number: **20203005.2**

(22) Date of filing: **21.10.2020**

(51) International Patent Classification (IPC):
**F01N 3/20** (2006.01)

(52) Cooperative Patent Classification (CPC):
**F01N 3/2066; F01N 3/208;** F01N 2610/02;
F01N 2900/0412; F01N 2900/0601;
F01N 2900/1404; F01N 2900/1411;
F01N 2900/1602; F01N 2900/1806;
F01N 2900/1812; Y02A 50/20; Y02T 10/12

(54) **METHOD AND APPARATUS FOR CONTROLLING UREA CRYSTALLIZATION, STORAGE MEDIUM AND ELECTRONIC DEVICE**

VERFAHREN UND VORRICHTUNG ZUR STEUERUNG DER HARNSTOFFKRISTALLISATION, SPEICHERMEDIUM UND ELEKTRONISCHES GERÄT

PROCÉDÉ ET APPAREIL DE COMMANDE DE CRISTALLISATION D'URÉE, SUPPORT DE STOCKAGE ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2019 CN 201911374157**

(43) Date of publication of application:
**30.06.2021 Bulletin 2021/26**

(73) Proprietor: **Weichai Power Co., Ltd.
Weifang, Shandong 261061 (CN)**

(72) Inventors:
• **TAN, Xuguang
Weifang,, Shandong 261061 (CN)**
• **WANG, Yibao
Weifang,, Shandong 261061 (CN)**
• **ZHANG, Xiaoli
Weifang,, Shandong 261061 (CN)**

(74) Representative: **Dr. Gassner & Partner mbB
Wetterkreuz 3
91058 Erlangen (DE)**

(56) References cited:
CN-A- 108 595 802    CN-B- 103 573 358
CN-B- 106 226 085    CN-B- 106 837 498
CN-B- 109 611 185

**Description**

**TECHNICAL FIELD**

The present application relates to the field of vehicle technologies and, in particular, to a method and apparatus for controlling urea crystallization, a storage medium and an electronic device.

**BACKGROUND**

At present, the selective catalytic reduction (SCR) technology is the most effective method to control emissions of nitrogen oxides ($NO_x$) from diesel engines. After impingement, evaporation, hydrolyzation, pyrolyzation and other processes, urea water solution is injected into an exhaust manifold by a urea injection system and converted into, then $NO_x$ in the exhaust gas is reduced to $N_2$ for emission by the NH3, and excess $NH_3$ is also oxidized to $N_2$ for emission. These processes all need to absorb heat from exhaust. When an exhaust temperature is low, urea might be decomposed incompletely and crystallize in the injection system, on a wall of the exhaust manifold, or in a catalytic converter. If crystallization is serious, stones might be generated, causing blockage of a urea flow passage, resulting in an increased urea consumption, a reduced conversion efficiency, etc., and even affecting a performance of the engine.

In prior art, certain measures are usually taken after accumulation of urea crystallization reaches a certain amount, such as electric purging, suck-back, etc., to eliminate or reduce the urea crystallization in the system.

CN 109611185 B discloses a urea crystallization risk prediction method of a Urea-SCR post-treatment system. The prediction method is: judging the urea crystallization risk level of the post-processing system according to the size of the CRF. If CRF>A2, it is determined that there is no risk of urea crystallization; if A1≤CRF≤A2, it is determined that the risk of urea crystallization is low; if CRF< A1, it is judged that the risk of urea crystallization is higher.

CN 108595802 A discloses a simulation-based urea crystallization risk evaluation method for an SCR system. The method includes the steps of S1, according to urea crystallization generation principle and generation necessary conditions, analyzing key factors of generating urea crystal substances; and S2, establishing influence weight coefficients of the key factors, and performing weighting processing on the key factors through the influence weight coefficients to obtain a urea crystallization risk coefficient $\gamma$ under a selected working condition.

CN 106837498 B discloses urea crystallization amount estimation, crystalline state judging and crystal eliminating method. Based on the engine running working conditions, influences of the urea crystallization speed and the SCR conversion efficiency on urea crystallization are estimated under the current working condition.

CN 106226085 B discloses a diesel engine SCR aftertreatment system exhaust pipe crystallization rack test method. The method includes the steps of P1: selection of a test engine; P2: engine hot running-in; P3: determination of engine performance and original emissions; P4: determination of normal working of an aftertreatment system and emission determination of the SCR after-treatment system; P5: the SCR system exhaust pipe crystallization test method; and P6: judgment of passing of the SCR after treatment system crystallization test.

CN 103573358 B discloses a urea crystallization detecting and testing method of an SCR tail gas treatment system of an engine. The method includes the steps of firstly, in a testing cycle, allowing the engine to sequentially and continuously work under various preset testing work conditions; secondly, after the testing cycle, calculating the ratio of the area of urea crystal substances accumulated on the cross section of the atomizer (7) of the SCR tail gas treatment system to the area of the cross section of the atomizer (7) to obtain the blocking area ratio; and thirdly, repeating the first step and the second step to obtain each blocking area ratio of the atomizer (7) in multiple testing cycles.

However, existing methods cannot avoid a series of problems caused by accumulation of urea crystallization, such as the blockage of a urea flow passage and the like.

**SUMMARY**

The present invention is set out in the appended set of claims. The present application provides a method and apparatus for controlling urea crystallization, a storage medium and an electronic device, which can effectively avoid a series of problems caused by accumulation of urea crystallization.

In a first aspect, the present application provides a method for controlling urea crystallization with the features of claim 1.

According to the invention, the determining, according to the crystallization energy factor-exhaust temperature value pairs, a urea crystallization risk factor within the preset time period includes:

establishing a hash map for a distribution of the crystallization energy factor-exhaust temperature value pairs; and
determining, according to the hash map, the urea crystallization risk factor within the preset time period.

According to the invention, the determining, according to the hash map, the urea crystallization risk factor within the preset time period includes:

determining percentages of crystallization energy factor-exhaust temperature value pairs in different crystallization energy factor-exhaust temperature areas on the hash map;
acquiring crystallization risk coefficients corresponding to the different crystallization energy factor-exhaust temperature areas;
determining, according to the percentages and the crystallization risk coefficients, the crystallization risk factor.

In an implementation, the determining, according to the percentages and the crystallization risk coefficients, the crystallization risk factor includes:
determining, according to the percentages and the crystallization risk coefficients, the crystallization risk factor by a

$$\eta = \sum_1^N \Lambda(\text{k})\text{M}(\text{k})$$

formula , where $\eta$ represents the crystallization risk factor, $N$ represents the number of crystallization energy factor-exhaust temperature areas distributed, A(k) represents a percentage of a crystallization energy factor-exhaust temperature value pair in a k$^{th}$ crystallization energy factor-exhaust temperature area, and M (k) represents a crystallization risk coefficient corresponding to the k$^{th}$ crystallization energy factor-exhaust temperature area.

According to the invention, the acquiring, according to a preset sampling interval, crystallization energy factors and exhaust temperatures of an operating area of an engine within a preset time period, and obtaining crystallization energy factor-exhaust temperature value pairs includes:

acquiring, according to the preset sampling interval, the exhaust temperature of the operating area of the engine within the preset time period;
determining, according to the exhaust temperatures, the crystallization energy factors; and
generating, according to the exhaust temperatures and corresponding crystallization energy factors, the crystallization energy factor-exhaust temperature value pairs.

According to the invention, before the determining, according to the exhaust temperatures, the crystallization energy factors, the method further includes:

acquiring, according to the preset sampling interval, exhaust flows of the engine, temperatures of urea solution dripping on a wall surface, temperatures of urea solution in a space, mass flows of urea solution, a temperature of the urea solution during injection, a temperature of the urea solution after heat exchange, and latent heat of vaporization of the urea solution within the preset time period;
correspondingly, the determining, according to the exhaust temperatures, the crystallization energy factors includes:
determining, according to the exhaust temperatures, the crystallization energy factors by a formula

$$E_r = \frac{\iint m_1 h(T_0 - T_1) d_i d_j + \iiint m_1 h(T_0 - T_2) d_i d_j d_k}{m_2 c(T_p - T_h) + m_2 L}$$

, where $E_r$ represents a crystallization energy factor at time $t_1$, $m_1$ represents an exhaust flow of the engine at the time $t_1$, $T_0$ represents an exhaust temperature of the engine at the time $t_1$, $T_1$ represents a temperature of the urea solution dripping at a position ($d_i$, $d_j$) of the wall surface at the time $t_1$, $T_2$ represents a temperature of the urea solution in a space ($d_i$, $d_j$, $d_k$) at the time $t_1$, $m_2$ represents a mass flow of the urea solution at the time $t_1$, $T_p$ represents the temperature of the urea solution during injection, $T_h$ represents the temperature of the urea solution after heat exchange, $L$ represents the latent heat of vaporization of the urea solution, $h$ represents a heat capacity of exhaust, and $C$ represents a heat capacity of urea, $t_1$ represents a certain sampling time within the preset time period.

According to the invention, the activating a urea crystallization adaptive control strategy includes:
raising an exhaust temperature of the engine.
In a second aspect, the present application provides an apparatus for controlling urea crystallization, configured to perform the inventive method, with the features of claim 3.
In a third aspect, the present application provides a storage medium configured to store a computer program, and the computer program is configured to implement the above method for controlling urea crystallization.
In a fourth aspect, the present application provides an electronic device, including: a memory and a processor;

the memory is configured to store a computer program, and the processor executes the computer program to implement the above method for controlling urea crystallization.

Embodiments of the present application provide a method and apparatus for controlling urea crystallization, a storage medium and an electronic device, by acquiring, according to a preset sampling interval, crystallization energy factors and exhaust temperatures of an operating area of an engine within a preset time period, and obtaining crystallization energy factor-exhaust temperature value pairs, and determining a urea crystallization risk factor within the preset time period according to the crystallization energy factor-exhaust temperature value pairs, the urea crystallization risk factor being used to measure a possibility of forming the urea crystallization, and activating a urea crystallization adaptive control strategy to enable a urea selective catalytic reduction SCR system to enter a urea crystallization active removing mode upon determining that the crystallization risk factor is greater than a preset threshold, thus achieving an active control of the amount of the urea crystallization in the SCR system on the basis of accurate prediction of urea crystallization, avoiding a series of problems caused by accumulation of urea, and improving an exhaust treatment and an operational stability of the vehicle.

**BRIEF DESCRIPTION OF DRAWINGS**

In order to describe the technical solutions in the present application or the prior art more clearly, the accompanying drawings required for describing embodiments or the prior art are briefly introduced in the following. Obviously, the accompanying drawings in the following description are some embodiments of the present application, and persons of ordinary skill in the art may still derive other drawings from these accompanying drawings without creative effort.

FIG. 1 is a schematic structural diagram of a urea SCR system according to an embodiment of the present application;
FIG. 2 is a schematic flowchart of Embodiment 1 of a method for controlling urea crystallization according to an embodiment of the present application;
FIG. 3 is a schematic flowchart of Embodiment 2 of a method for controlling urea crystallization according to an embodiment of the present application;
FIG. 4 is a schematic diagram of grids of crystallization energy factor-exhaust temperature value pairs according to an embodiment of the present application;
FIG. 5 is a schematic flowchart of Embodiment 3 of a method for controlling urea crystallization according to an embodiment of the present application;
FIG. 6 is a schematic flowchart of Embodiment 4 of a method for controlling urea crystallization according to an embodiment of the present application;
FIG. 7 is a schematic structural diagram of an embodiment of apparatus for controlling urea crystallization according to an embodiment of the present application; and
FIG. 8 is a schematic structural diagram of an electronic device according to an embodiment of the present application.

**DESCRIPTION OF EMBODIMENTS**

In order to make objectives, technical solutions and advantages of the present application clear, the technical solutions in the present application will be described clearly and comprehensively in the following with reference to the accompanying drawings in the present application. Obviously, the described embodiments are only part rather than all of embodiments of the present application. All other embodiments obtained by persons of ordinary skill in the art based on the embodiments in the present application without creative work shall fall within the protection scope of the present application.

A basic principle of SCR technology is to inject fuel into or add other reducing agents to the exhaust gas, and select a suitable catalyst to promote a reducing agent to react with $NO_x$, while inhibiting the reducing agent from being oxidized by oxygen in the exhaust gas. According to the types of reducing agents, the existing SCR technologies can be divided into a urea SCR technology using $NH_3$ produced by urea decomposition as a reducing agent and a hydrocarbon SCR technology using hydrocarbon as a reducing agent. At present, the hydrocarbon SCR technology is still under further research, and is thus not widely applied; while the urea SCR technology is more mature and widely applied.

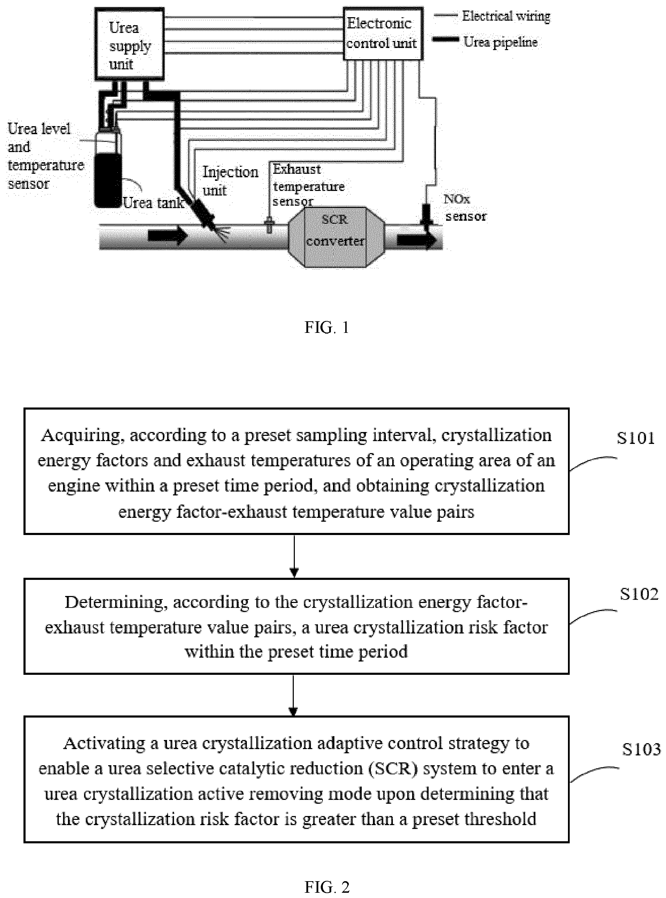

FIG. 1 is a schematic structural diagram of a urea SCR system according to an embodiment of the present application. As shown in FIG. 1, the urea SCR system mainly includes an electronic control unit (ECU), a urea supply unit (urea pump), a urea level and temperature sensor, a urea tank, an injection unit, an exhaust temperature sensor, an $NO_x$ temperature sensor, and a SCR catalytic converter. As such, the urea tank is configured to store urea solution and is integrated with the level and temperature sensor thereon. The ECU is configured to acquire engine status information and signals acquired by each sensor, and control, according to a pre-calibrated manifold absolute pressure (MAP), the urea supply unit and the injection unit so that a certain amount of the urea solution can be injected under a certain injection pressure at a right time. The urea supply unit is configured to deliver the urea solution at a certain pressure according to a control command of the ECU. The injection unit is configured to inject the urea solution according to the command of the ECU.

During an operation of a diesel vehicle with the SCR system under low load conditions, due to poor urea atomization, uneven mixing, or incomplete decomposition of the urea, injected urea droplets cannot be converted into $NH_3$ in real time, instead, by-products are generated, thus resulting in instable reduction reaction and affecting consistency and conversion efficiency of $NO_x$ emissions. Urea deposits can be divided into urea crystallization and urea stones according to their formation processes. The urea crystallization is caused by precipitation of supersaturated urea due to loss of water in the urea solution, and is a product of a physical reaction process, which can further decompose as the temperature raises; while the urea stones are caused by the by-products produced by a side reaction in the process of urea decomposition, and belongs to chemical reaction products, which can only decompose at a relatively high temperature. Since mass of urea droplets is much greater than that of gas, crystallization formed in a stagnation area of the air flow will continue to grow as pronucleus if they cannot be completely decomposed in time, and urea stones are eventually formed due to the incomplete decomposition, thus blocking the urea flow passage when accumulation reaches a certain amount, thereby affecting a stable operation of a vehicle.

According to most of treatment methods in the prior art, corresponding measures are taken after formation of urea crystallization, that is, a "problem-solving" passive method is adopted to deal with the formed crystallization. Therefore, a problem of the urea crystallization could not be avoided by applying the methods in the prior art.

Aiming at the above technical problem, the present application proposes a method and apparatus for controlling urea crystallization, and a storage medium. By coupling three influencing factors including an exhaust flow, an exhaust temperature and a urea injection amount, and a ratio of energy actually acquired in a process of urea decomposition to a theoretically required energy is used as a basis for prediction of crystallization risk, thereby preventing an occurrence of the problem of the urea crystallization, and improving an emission durability of the diesel vehicle and an operational stability of the vehicle.

An overall inventive concept of embodiments of the present application is: under a guidance of the theory of "crystallization energy factor", by calculating a percentage of crystallization energy factors and exhaust temperatures of an operating area of an engine within a certain time range, and obtaining urea crystallization risk coefficients in different operating areas through a large number of experimental studies, a crystallization risk factor in this time range can be accurately predicted. When the crystallization risk factor exceeds a set value, a urea crystallization adaptive control strategy will be triggered, and a series of problems caused by the urea crystallization are avoided by accurate prediction of the urea crystallization.

FIG. 2 is a schematic flowchart of Embodiment 1 of a method for controlling urea crystallization according to an embodiment of the present application. An execution subject matter of the embodiment is an ECU. As shown in FIG. 2, the method of the embodiment includes:

S101: acquiring, according to a preset sampling interval, crystallization energy factors and exhaust temperatures of an operating area of an engine within a preset time period, and obtaining crystallization energy factor-exhaust temperature value pairs.

In the step, after the engine is started, according to the preset sampling interval, through data collection or calculation, values of the crystallization energy factors and the exhaust temperatures of the operating area of the engine within a preset time range can be acquired, thus value pairs formed by the crystallization energy factors and the exhaust temperatures, that is, the crystallization energy factor-exhaust temperature value pairs can be obtained.

As such, the preset sampling interval is a preset sampling period, that is, a time interval between two adjacent sampling points, which is used to control a sampling frequency. In order to improve an accuracy of data analysis, as many value pairs as possible shall be acquired, that is, the sampling interval shall be set as small as possible.

The preset time period is a preset analysis period. In order to improve an accuracy of control and avoid excessive accumulation of urea, collection and analysis of data need to be done in different periods.

Illustratively, assuming that the preset time period is 1 hour and the preset sampling interval is 1 minute, then a crystallization energy factor value and an exhaust temperature value can be acquired every 1 minute, and the two values are matched to form a crystallization energy factor-exhaust temperature value pair, and finally 60 crystallization energy factor-exhaust temperature value pairs can be obtained.

S102: determining, according to the crystallization energy factor-exhaust temperature value pairs, a urea crystallization risk factor within the preset time period.

In the step, after S101, based on the multiple crystallization energy factor-exhaust temperature value pairs acquired in S101, through data analysis and calculation, the urea crystallization risk factor within the preset time period can be obtained. This crystallization risk factor is used to measure a possibility of forming the urea crystallization in a SCR system.

As in the above example, if crystallization energy factor-exhaust temperature value pairs collected are 60, then the crystallization risk factor in the operating area of the engine within the 1 hour can be obtained by analyzing these the 60 crystallization energy factor-exhaust temperature value pairs.

It can be understood that when operating conditions of the vehicle are different, that is, when the operating areas of the engine are different, the crystallization risk factors obtained within the same preset time period may be different.

S103: activating a urea crystallization adaptive control strategy to enable a urea selective catalytic reduction (SCR) system to enter a urea crystallization active removing mode upon determining that the crystallization risk factor is greater than a preset threshold.

In this step, after S102, based on the analysis of the acquired crystallization risk factor value, upon determining that the crystallization risk factor is greater than the preset threshold, then the urea crystallization adaptive control strategy will be activated to enable the urea SCR system to enter the urea crystallization active removing mode.

Activating the urea crystallization adaptive control strategy refers to taking appropriate measures to control the urea selective catalytic reduction SCR system to enter the urea crystallization active removing mode according to the situation that the crystallization risk factor is greater than the preset threshold.

In a possible implementation, the urea crystallization adaptive control strategy includes:
raising an exhaust temperature of the engine, and/or triggering an operation of a diesel particulate filter (DPF).

Illustratively, if the crystallization risk factor is simply slightly greater than the preset threshold, enabling the urea selective catalytic reduction (SCR) system to enter the urea crystallization active removing mode by raising the exhaust temperature of the engine or triggering the DPF; if the crystallization risk factor is much greater than the preset threshold, enabling the urea selective catalytic reduction (SCR) system to enter the urea crystallization active removing mode by both raising the exhaust temperature of the engine and triggering the DPF.

In an implementation, in the embodiment, the preset time period can be adaptively adjusted according to different operating areas of the engine.

Illustratively, if the vehicle is running on a gentle road section, the preset time period can be appropriately extended, and if the vehicle is running on a road section with high fuel consumption, such as a mountain road, the preset time period can be appropriately shortened, so as to ensure an effective control of the urea crystallization, and timely treat the urea crystallization that may be generated in the SCR system to prevent an accumulation of the urea crystallization from affecting an exhaust treatment effect and the operational stability of the vehicle.

In addition, it can be understood that the above method of S101-S103 refers to a method for controlling the urea crystallization within a preset time period, and when the engine is running for a long time, S101-S103 can be executed cyclically, so that the urea crystallization of the SCR system is under control during an entire running process of the engine.

In the embodiment, by acquiring, according to a preset sampling interval, crystallization energy factors and exhaust temperatures of an operating area of an engine within a preset time period, and obtaining crystallization energy factor-exhaust temperature value pairs, and determining a urea crystallization risk factor within the preset time period according to the crystallization energy factor-exhaust temperature value pairs, the urea crystallization risk factor being used to measure a possibility of forming the urea crystallization, and activating a urea crystallization adaptive control strategy to enable a urea selective catalytic reduction (SCR) system to enter a urea crystallization active removing mode upon determining that the crystallization risk factor is greater than a preset threshold, thus achieving a control of the amount of the urea crystallization in the SCR system on the basis of accurate prediction of urea crystallization, avoiding a series of problems caused by accumulation of urea, and improving an exhaust treatment and an operational stability of the vehicle.

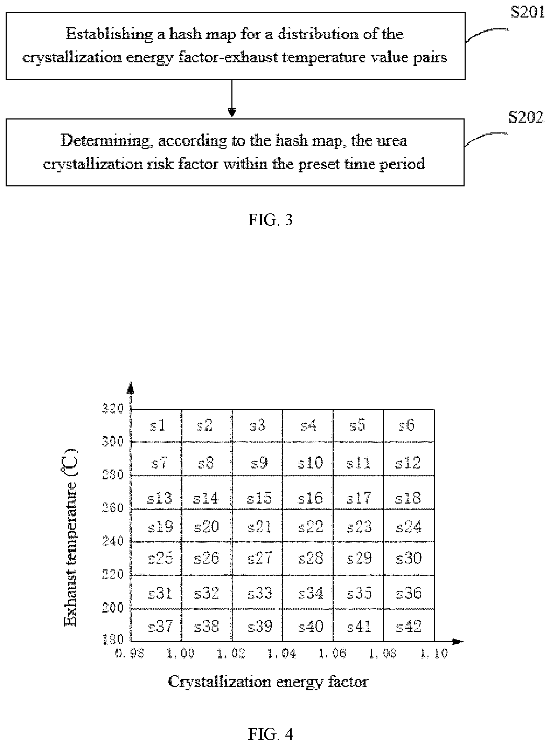

FIG. 3 is a schematic flowchart of Embodiment 2 of a method for controlling urea crystallization according to an embodiment of the present application. Based on the embodiment shown in FIG. 2, as shown in FIG. 3, in this embodiment, the determine, according to the crystallization energy factor-exhaust temperature value pairs, a urea crystallization risk factor within the preset time period includes:

S201: establishing a hash map for a distribution of the crystallization energy factor-exhaust temperature value pairs.

In the step, distribution of the crystallization energy factor-exhaust temperature value pairs is analyzed by means of a hash map.

Illustratively, using the crystallization energy factor as an abscissa and the exhaust temperature as an ordinate, grids of the crystallization energy factor-exhaust temperature are established, and the acquired crystallization energy factor-exhaust temperature value pairs are shown correspondingly in the grids.

Conversely, it is also possible to use the exhaust temperature as the abscissa and the crystallization energy factor as the ordinate to establish the hash map for the distribution of the crystallization energy factor-exhaust temperature value pairs.

In addition, in order to improve contrast and standardization of each analysis, grids of the crystallization energy factor-exhaust temperature value pairs can be established in advance, that is, the abscissa and ordinate and their unit lengths can be determined, as shown in FIG. 4. FIG. 4 is a schematic diagram of grids of crystallization energy factor-exhaust temperature value pairs according to an embodiment of the present application, then different crystallization energy factor-exhaust temperature value pairs are marked at corresponding positions on the crystallization energy factor-exhaust temperature grids, thus obtaining a hash map for the distribution of the crystallization energy factor-exhaust temperature value pairs.

S202: determining, according to the hash map, the urea crystallization risk factor within the preset time period.

In the embodiment, the urea crystallization risk factor of urea solution in the SCR system within the preset time period can be obtained through statistics and analysis according to the hash map for the distribution of the crystallization energy factor-exhaust temperature value pairs established in S201.

The embodiment provides a method for analyzing the crystallization energy factor-exhaust temperature value pairs to acquire the crystallization risk factor. By establishing a hash map for a distribution of the crystallization energy factor-exhaust temperature value pairs, and determining the urea crystallization risk factor within a preset time period according to the hash map, thus achieving an accurate predict prediction of the urea crystallization, thereby providing a basis for controlling urea crystallization of the SCR system.

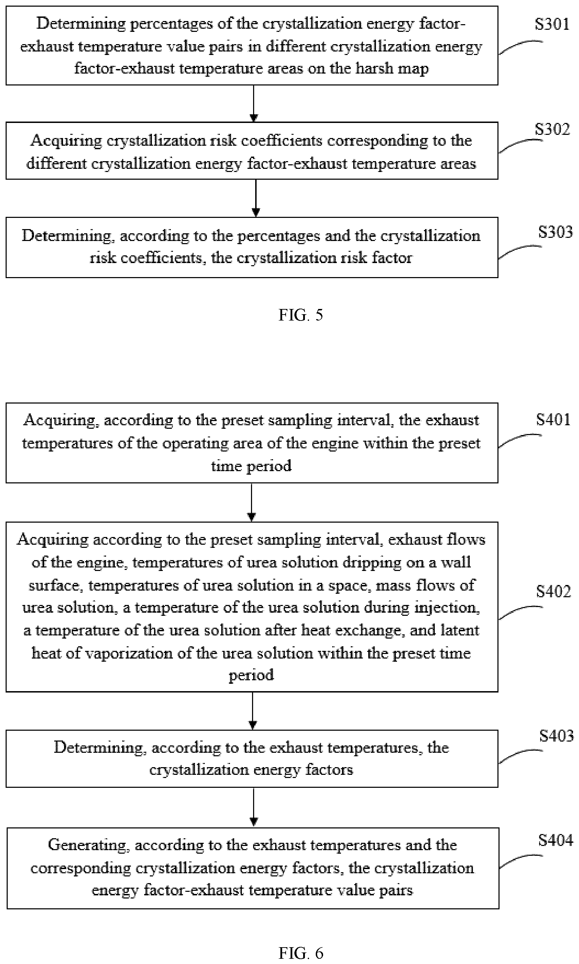

FIG. 5 is a schematic flowchart of Embodiment 3 of a method for controlling urea crystallization according to an embodiment of the present application. Based on the embodiment shown in FIG. 3, as shown in FIG. 5, the determine, according to the hash map, the urea crystallization risk factor within the preset time period includes:

S301: determining percentages of the crystallization energy factor-exhaust temperature value pairs in different crystallization energy factor-exhaust temperature areas on the hash map.

In the step, different crystallization energy factor-exhaust temperature areas can be divided as needed to facilitate the analysis of the crystallization energy factor-exhaust temperature value pairs, the percentages of crystallization energy factor-exhaust temperature value pairs in different crystallization energy factor-exhaust temperature areas on the hash map are determined according to the distribution of the crystallization energy factor-exhaust temperature value pairs on the hash map.

As such, the percentage of the crystallization energy factor-exhaust temperature value pairs refers to the ratio of the number of crystallization energy factor-exhaust temperature value pairs falling in a certain crystallization energy factor-exhaust temperature area to a total number of crystallization energy factor-exhaust temperature value pairs collected within the preset time period.

Illustratively, as shown in FIG. 4, each small grid in the figure is used as an area of crystallization energy factor-exhaust temperature area. Therefore, there are 42 areas in the figure, from top to bottom, and from left to right, they are numbered as s1, s2, s3, ..., s42 successively. Then the number of crystallization energy factor-exhaust temperature value pairs in each crystallization energy factor-exhaust temperature area can be counted, and the ratio thereof to the total number of the collected crystallization energy factor-exhaust temperature value pairs within the preset time period may be calculated. For instance, if the number of crystallization energy factor-exhaust temperature value pairs in s5 is 3 and the total number of the collected crystallization energy factor-exhaust temperature value pairs is 60, then the percentage of crystallization energy factor-exhaust temperature value pairs in s5 can be determined to be 5%.

S302: acquiring crystallization risk coefficients corresponding to the different crystallization energy factor-exhaust temperature areas.

In this step, according to the crystallization energy factor-exhaust temperature areas distributed in S301, the corresponding crystallization risk coefficients corresponding to the different crystallization energy factor-exhaust temperature areas may be acquired.

The crystallization risk coefficient is a value calibrated through a large number of tests, and is configured to measure a risk of the urea crystallization in a certain exhaust temperature range and a certain crystallization energy factor range.

Illustratively, as shown in FIG. 4, each crystallization energy factor-exhaust temperature area corresponds to a pre-calibrated crystallization risk coefficient, and the crystallization risk coefficient can be either linked to a grid of a corresponding crystallization energy factor-exhaust temperature area or be saved in another data sheet. As required, ECU automatically goes to a corresponding data sheet and a corresponding position to acquire the crystallization risk coefficient corresponding to the crystallization energy factor-exhaust temperature area.

S303: determining, according to the percentages and the crystallization risk coefficients, the crystallization risk factor.

In this step, according to the percentages of the crystallization energy factor-exhaust temperature value pairs in different crystallization energy factor-exhaust temperature areas obtained in S301, and the crystallization risk coefficients corresponding to different crystallization energy factor-exhaust temperature areas acquired in S302, a crystallization risk factor within the preset time period can be obtained.

In a possible implementation, according to the percentages and the crystallization risk coefficients, the crys-

$$\eta = \sum_{1}^{N} \Lambda(k)M(k)$$

tallization risk factor can be determined by a formula , where $\eta$ represents the crystallization risk factor, $N$ represents the number of crystallization energy factor-exhaust temperature areas distributed, $\Lambda(k)$ represents

a percentage of a crystallization energy factor-exhaust temperature value pair in a $k^{th}$ crystallization energy factor-exhaust temperature area, and M(k) represents the crystallization risk coefficient corresponding to the $k^{th}$ crystallization energy factor-exhaust temperature area.

$$\eta = \sum_{1}^{N} \Lambda(k)M(k)$$

Illustratively, as shown in FIG. 4, N is 42, and means that a product of the percentage of the crystallization energy factor-exhaust temperature value pairs in each crystallization energy factor-exhaust temperature area in the figure and the corresponding crystallization risk coefficient will be calculated first, and then the sum, that is $\Lambda(1)M(1) + \Lambda(2)M(2) + ...+ \Lambda(42)M(42)$ will be calculated.

In the embodiment, by determining percentages of crystallization energy factor-exhaust temperature value pairs in different crystallization energy factor-exhaust temperature areas on the hash map, acquiring crystallization risk coefficients corresponding to the different crystallization energy factor-exhaust temperature areas, and determining the crystallization risk factor according to the percentages and the crystallization risk coefficients, hence achieving an accurate prediction of the urea crystallization risk, thereby helping to improve a control accuracy of the urea crystallization.

FIG. 6 is a schematic flowchart of Embodiment 4 of a method for controlling urea crystallization according to an embodiment of the present application. Based on the above embodiments, as shown in FIG. 6, in the embodiment, the acquiring, according to a preset sampling interval, crystallization energy factors and exhaust temperatures of an operating area of an engine within a preset time period, and obtaining crystallization energy factor-exhaust temperature value pairs includes:

S401: acquiring, according to the preset sampling interval, the exhaust temperatures of the operating area of the engine within the preset time period.

In this step, within the preset time period, a value of an exhaust temperature of the engine in a current operating area is collected every preset sampling interval, and thus a series of exhaust temperature values which are distributed in time can be obtained.

In an implementation, a temperature sensor is used to acquire the exhaust temperature of the operating area of the engine within the preset time period according to the preset sampling interval.

S403: determining, according to the exhaust temperatures, the crystallization energy factors.

In this step, the crystallization energy factors are determined according to the exhaust temperatures acquired in the S401.

It can be understood that each exhaust temperature value acquired in S401 corresponds to one crystallization energy factor, and the number of finally acquired crystallization energy factors is the same as the number of the exhaust temperature values, and the crystallization energy factors are also distributed in time.

In a possible implementation, in order to determine the crystallization energy factors, before S403, further including:

S402: acquiring, according to the preset sampling interval, exhaust flows of the engine, temperatures of urea solution dripping on a wall surface, temperatures of urea solution in a space, mass flows of urea solution, a temperature of the urea solution during injection, a temperature of the urea solution after heat exchange, and latent heat of vaporization of the urea solution within the preset time period.

It can be understood that this step is performed in synchronization with S401. While acquiring the exhaust temperatures according to the preset sampling interval, acquiring the exhaust flows of the engine, the temperatures of the urea solution dripping on the wall surface, the temperatures of the urea solution in the space, the mass flows of the urea solution, the temperature of the urea solution during injection, the temperature of the urea solution after heat exchange, and the latent heat of vaporization of the urea solution respectively, and correspondingly, acquiring a position at which the temperature of the urea solution dripping on the wall surface is collected and a position at which the temperature of the urea solution in the space is collected.

The above values can be obtained by ECU controlling sensors installed at different positions in a urea SCR system and with different functions.

The corresponding relationship between each value and the exhaust temperatures can be determined according to the table below:

| | $t_0$ | $t_0 +T$ | $t_0 +2T$ | ...... | $t_0 +nT$ |
|---|---|---|---|---|---|
| Exhaust temperature ($T_0$) | | | | | |
| Exhaust flow ($m_1$) | | | | | |
| Temperature of the urea solution dripping on the wall surface ($T_1$) | | | | | |

(continued)

|  | $t_0$ | $t_0+T$ | $t_0+2T$ | ...... | $t_0+nT$ |
|---|---|---|---|---|---|
| Position coordinate at which the temperature of the urea solution dripping on the wall surface is collected ($d_i$, $d_j$) |  |  |  |  |  |
| Temperature of the urea solution in the space ($T_2$) |  |  |  |  |  |
| Position coordinate at which the temperature of the urea solution in the space is collected ($d_i$, $d_j$, $d_k$) |  |  |  |  |  |
| Mass flow of the urea solution ($m_2$) |  |  |  |  |  |
| Temperature of the urea solution during injection ($T_p$) |  |  |  |  |  |
| Temperature of the urea solution after heat exchange ($T_h$) |  |  |  |  |  |
| Latent heat of vaporization of the urea solution ($L$) |  |  |  |  |  |

In the above table, $t_0$ represents an initial sampling time, $T$ represents a sampling interval, $nT$ represents a n$^{th}$ sampling interval, and $t_0+nT$ represents a (n+1)$^{th}$ sampling time.

Correspondingly, S403 includes:

determining, according to the exhaust temperatures, the crystallization energy factors by a formula

$$E_r = \frac{\iint m_1 h(T_0 - T_1)d_i d_j + \iiint m_1 h(T_0 - T_2)d_i d_j d_k}{m_2 c(T_p - T_h) + m_2 L}$$

, where $E_r$ represents a crystallization energy factor at time $t_1$, $m_1$ represents an exhaust flow of the engine at the time $t_1$, $T_0$ represents an exhaust temperature of the engine at the time $t_1$, $T_1$ represents a temperature of the urea solution dripping at a position ($d_i$, $d_j$) of the wall surface at the time $t_1$, $T_2$ represents a temperature of the urea solution in a space ($d_i$, $d_j$, $d_k$) at the time $t_1$, $m_2$ represents a mass flow of the urea solution at the time $t_1$, $T_p$ represents the temperature of the urea solution during injection, $T_h$ represents the temperature of the urea solution after heat exchange, $L$ represents the latent heat of vaporization of the urea solution, $h$ represents a heat capacity of exhaust (constant), and $c$ represents a heat capacity of urea (constant).

$$E_r = \frac{\iint m_1 h(T_0 - T_1)d_i d_j + \iiint m_1 h(T_0 - T_2)d_i d_j d_k}{m_2 c(T_p - T_h) + m_2 L}$$

The formula represents a ratio of energy provided by flue gas to the urea solution to energy required for vaporization of the urea solution. When $E_r$ is less than 1, it means that the energy provided by the flue gas to the urea solution is not enough to achieve complete vaporization of the urea solution, thus the crystallization occurs easily.

By coupling three influencing factors including the exhaust flow, exhaust temperature and urea injection amount by virtue of the crystallization energy factor, and using the crystallization energy factor as a basis for predicting a urea crystallization risk, thereby improving an accuracy of a prediction result.

S404: generating, according to the exhaust temperatures and the corresponding crystallization energy factors, the crystallization energy factor-exhaust temperature value pairs.

In this step, according to the exhaust temperatures acquired in the S401 and the crystallization energy factors obtained in the S403, associating the exhaust temperatures with the corresponding crystallization energy factors to generate the crystallization energy factor-exhaust temperature value pairs at different sampling times within the preset time period.

Illustratively, within the preset time period, according to the preset sampling interval, the exhaust temperatures acquired are 280°C, 285°C, 282°C, 285°C, 290°C, and 287°C, and the crystallization energy factors calculated according to the above crystallization energy factor formula are 1.01, 1.02, 0.99, 0.98, 1.00, and 0.99, and then the obtained crystallization energy factor-exhaust temperature value pairs are (1.01, 280°C), (1.02, 285°C), (0.99, 282°C), (0.98, 285°C), (1.00, 290°C), and (0.99, 287°C).

In the embodiment, by acquiring the exhaust temperatures of the operating area of the engine within the preset time period according to the preset sampling interval, determining the crystallization energy factors according to the exhaust temperatures, and then generating the crystallization energy factor-exhaust temperature value pairs based on the exhaust temperatures and the corresponding crystallization energy factors, thus providing an analysis basis for acquiring the crystallization risk factor and improving a prediction accuracy of the urea crystallization risk in the SCR system, thereby improving a control accuracy of the urea crystallization.

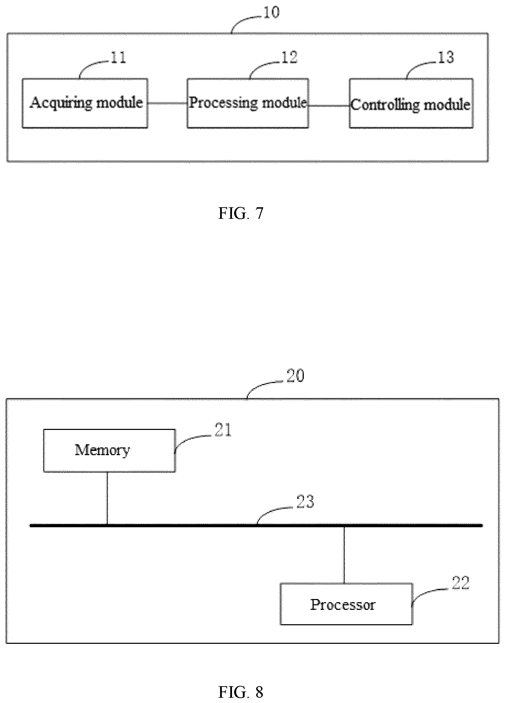

FIG. 7 is a schematic structural diagram of an embodiment of a control apparatus according to an embodiment of the present application. As shown in FIG. 7, apparatus for controlling urea crystallization 10 in the embodiment includes: an acquiring module 11, a processing module 12, and a controlling module 13.

The acquiring module 11, configured to acquire, according to a preset sampling interval, crystallization energy factors and exhaust temperatures of an operating area of an engine within a preset time period, and obtaining crystallization energy factor-exhaust temperature value pairs.

The processing module 12, configured to determine, according to the crystallization energy factor-exhaust temperature value pairs, a urea crystallization risk factor within the preset time period, where the urea crystallization risk factor is used to measure a possibility of forming the urea crystallization.

The controlling module 13, configured to activate a urea crystallization adaptive control strategy to enable a selective catalytic reduction SCR system to enter a urea crystallization active removing mode upon determining that the crystallization risk factor is greater than a preset threshold.

In an implementation, the activating a urea crystallization adaptive control strategy includes:
raising an exhaust temperature of the engine, and/or triggering an operation of a diesel particulate filter DPF.

In an implementation, the processing module 12 is specifically configured to:

establish a hash map for a distribution of the crystallization energy factor-exhaust temperature value pairs; and
determine, according to the hash map, the urea crystallization risk factor within the preset time period.

In an implementation, the processing module 12 is specifically configured to:

determine percentages of crystallization energy factor-exhaust temperature value pairs in different crystallization energy factor-exhaust temperature areas on the hash map;
acquire crystallization risk coefficients corresponding to the different crystallization energy factor-exhaust temperature areas; and
determine, according to the percentages and the crystallization risk coefficients, the crystallization risk factor.

In an implementation, the processing module 12 is specifically configured to:
determine, according to the percentages and the crystallization risk coefficients, the crystallization risk factor by a formula

$$\eta = \sum_{1}^{N} \Lambda(k)M(k)$$

, where $\eta$ represents a crystallization risk factor, $N$ represents the number of crystallization energy factor-exhaust temperature areas distributed, $\Lambda(k)$ represents a percentage of a crystallization energy factor-exhaust temperature value pair in a $k^{th}$ crystallization energy factor-exhaust temperature area, and $M(k)$ represents a crystallization risk coefficient corresponding to the $k^{th}$ crystallization energy factor-exhaust temperature area.

In an implementation, the acquiring module 11 is specifically configured to:

acquire, according to the preset sampling interval, the exhaust temperature of the operating area of the engine within the preset time period;
determine, according to exhaust temperatures, the crystallization energy factors;
generate, according to the exhaust temperatures and corresponding crystallization energy factors, the crystallization energy factor-exhaust temperature value pairs.

In an implementation, the acquiring module 11 is further configured to:
acquire, according to the preset sampling interval, exhaust flows of the engine, temperatures of urea solution dripping on a wall surface, temperatures of urea solution in a space, mass flows of urea solution, a temperature of the urea solution during injection, a temperature of the urea solution after heat exchange, and latent heat of vaporization of the urea solution within the preset time period;

Correspondingly, the acquiring module 11 is specifically configured to:
determine, according to the exhaust temperatures, the crystallization energy factors by a formula

$$E_r = \frac{\iint m_1 h(T_0 - T_1)d_i d_j + \iiint m_1 h(T_0 - T_2)d_i d_j d_k}{m_2 c(T_p - T_h) + m_2 L}$$

, where $E_r$ represents a crystallization energy factor at time $t_1$, $m_1$ represents an exhaust flow of the engine at the time $t_1$, $T_0$ represents an exhaust temperature of the engine at

the time $t_1$, $T_1$ represents a temperature of the urea solution dripping at a position ($d_i$, $d_j$) of the wall surface at the time $t_1$, $T_2$ represents a temperature of the urea solution in a space ($d_i$, $d_j$, $d_k$) at the time $t_1$, $m_2$ represents a mass flow of the urea solution at the time $t_1$, $T_p$ represents the temperature of the urea solution during injection, $T_h$ represents the temperature of the urea solution after heat exchange, $L$ represents the latent heat of vaporization of the urea solution, $h$ represents a heat capacity of exhaust, and $c$ represents a heat capacity of urea, $t_1$ represents a certain sampling time within the preset time period.

In the embodiment, by using the acquiring module 11 to acquire, according to a preset sampling interval, crystallization energy factors and exhaust temperatures of an operating area of an engine within a preset time period, and obtain crystallization energy factor-exhaust temperature value pairs, using the processing module 12 to determine a urea crystallization risk factor within the preset time period according to the crystallization energy factor-exhaust temperature value pairs, the urea crystallization risk factor being used to measure a possibility of forming the urea crystallization, and using the controlling module 13 to activate a urea crystallization adaptive control strategy to enable a urea selective catalytic reduction SCR system to enter a urea crystallization active removing mode upon determining that the crystallization risk factor is greater than the preset threshold, thus achieving a control of the amount of the urea crystallization in the SCR system on the basis of accurate prediction of urea crystallization, avoiding a series of problems caused by accumulation of urea, and improving an exhaust treatment and an operational stability of the vehicle.

The present application also provides a storage medium configured to store a computer program, and the computer program is configured to implement the method for controlling urea crystallization according to any of the above method embodiments.

Those skilled in the art may understand that all or part of the steps of any of the above method embodiments may be completed by hardware related to program instructions. The above program may be stored in a computer-readable storage medium. When the program is executed, all or part of the steps described in Embodiment 1 are performed.

The above computer-readable storage medium may be implemented by any type of volatile or non-volatile storage device or a combination thereof, such as a static random-access memory (SRAM), an electrically-erasable programmable read-only memory (EEPROM), an erasable programmable read-only memory (EPROM), a programmable read-only memory (PROM), a read-only memory (ROM), a magnetic memory, a flash memory, a magnetic disk or an optical disk. The readable storage medium may be any available medium that can be accessed by a general-purpose or special-purpose computer or similar electronic device.

The computer-readable storage medium may be coupled to a processor, so that the processor can read information from the above and can write information to the above medium. Of course, the above readable storage medium may also be an integral part of the processor. The processor and readable storage medium may be located in an application specific integrated circuits (ASIC). Of course, the processor and the readable storage medium may also exist as discrete components in an electronic device.

If the technical solutions of the present application are implemented in the form of software and sold or used as a product, they may be stored in a computer-readable storage medium. Based on this understanding, all or part of the technical solutions of the present application may be embodied in a software product, which is stored in a storage medium and includes a computer program or several instructions. The computer software product enables a computer device (which may be a personal computer, a server, a network device, or similar electronic devices) to perform all or part of the steps in the method in Embodiment 1 of the present application. The above storage medium may be any type of medium that can store program codes, such as a U disk, a mobile hard disk, a ROM, a random access memory (RAM), a magnetic disk or an optical disk.

FIG. 8 is a schematic structural diagram of an electronic device according to an embodiment of the present application. As shown in FIG. 8, an electronic device 20 in the embodiment includes: a memory 21 and a processor 22; the memory 21 is configured to store a computer program, and the processor 22 is configured to execute the computer program to implement the method for controlling urea crystallization according to any of the above method embodiments.

In an implementation, the electronic device 20 further includes a bus 23, and the memory 21 and the processor 22 are connected through the bus 23.

During an operation process of the electronic device, the memory 21 stores computer instructions, and at least one processor 22 executes the computer instructions stored in the memory 21, so that the electronic device 20 implements the method for controlling urea crystallization according to any of the above method embodiments.

For specific execution processes of the electronic device 20, reference may be made to Embodiment 1 through Embodiment 4 in the method embodiments. The principles of implementation and technical effects are similar and will not described in this embodiment.

In the embodiment, it should be understood that the processor may be a central processing unit (CPU), or may be other general-purpose processor, a digital signal processor (DSP), an ASIC, and so on. The general-purpose processor may be a microprocessor or other conventional processor. The computer instructions stored in the memory 21 may be directly executed by a hardware processor, or may be executed by hardware and software modules thereof in the processor.

The memory may include a high-speed RAM, and may also include a non-volatile memory (NVM), for example, at least one magnetic disk memory.

The bus may be an industry standard architecture (ISA) bus, a peripheral component interconnect (PCI) bus, an extended industry standard architecture (EISA) bus, etc. The bus can be divided into an address bus, a data bus, a control bus and so on. For ease of presentation, the bus in the accompanying drawing of the present application is not limited to only one bus or one type of bus.

Finally, it should be noted that the above embodiments are merely intended for describing the technical solutions of the present application, rather than limiting them.

**Claims**

1. A method for controlling urea crystallization, comprising:

acquiring (S101), according to a preset sampling interval, crystallization energy factors and exhaust temperatures of an operating area of an engine within a preset time period, and obtaining crystallization energy factor-exhaust temperature value pairs; wherein the acquiring (S101), according to a preset sampling interval, crystallization energy factors and exhaust temperatures of an operating area of an engine within a preset time period, and obtaining crystallization energy factor-exhaust temperature value pairs comprises:

acquiring (S401), according to the preset sampling interval, the exhaust temperatures of the operating area of the engine within the preset time period;
determining (S403), according to the exhaust temperatures, the crystallization energy factors; and
generating (S404), according to the exhaust temperatures and corresponding crystallization energy factors, the crystallization energy factor-exhaust temperature value pairs,
wherein before the determining (S403), according to the exhaust temperatures, the crystallization energy factors, the method further comprises:

acquiring (S402), according to the preset sampling interval, exhaust flows of the engine, temperatures of urea solution dripping on a wall surface, temperatures of urea solution in a space, mass flows of urea solution, a temperature of the urea solution during injection, a temperature of the urea solution after heat exchange, and latent heat of vaporization of the urea solution within the preset time period;
correspondingly, the determining (S403), according to the exhaust temperatures, the crystallization energy factors comprises:

determining, according to the exhaust temperatures, the crystallization energy factors by a formula

$$E_r = \frac{\iint m_1 h(T_0 - T_1) d_i d_j + \iiint m_1 h(T_0 - T_2) d_i d_j d_k}{m_2 c(T_p - T_h) + m_2 L}$$

where $E_r$ represents a crystallization energy factor at time $t_1$, $m_1$ represents an exhaust flow of the engine at the time $t_1$, $T_0$ represents an exhaust temperature of the engine at the time $t_1$, $T_1$ represents a temperature of the urea solution dripping at a position $(d_i, d_j)$ of the wall surface at the time $t_1$, $T_2$ represents a temperature of the urea solution in a space $(d_i, d_j, d_k)$ at the time $t_1$, $m_2$ represents a mass flow of the urea solution at the time $t_1$, $T_p$ represents the temperature of the urea solution during injection, $T_h$ represents the temperature of the urea solution after heat exchange, $L$ represents the latent heat of vaporization of the urea solution, $h$ represents a heat capacity of exhaust, and $c$ represents a heat capacity of urea, $t_1$ represents a certain sampling time within the preset time period
determining (S102), according to the crystallization energy factor-exhaust temperature value pairs, a urea crystallization risk factor within the preset time period, wherein the urea crystallization risk factor is used to measure a possibility of forming the urea crystallization, wherein the determining (S102), according to the crystallization energy factor-exhaust temperature value pairs, a urea crystallization risk factor within the preset time period comprises:

establishing (S201) a hash map for a distribution of the crystallization energy factor-exhaust temperature value pairs; and
determining (S202), according to the hash map, the urea crystallization risk factor within the preset time period, wherein the determining (S202), according to the hash map, the urea crystallization risk factor within the preset time period comprises:

determining (S301) percentages of crystallization energy factor-exhaust temperature value pairs in different crystallization energy factor-exhaust temperature areas on the hash map;
acquiring (S302) crystallization risk coefficients corresponding to the different crystallization energy factor-exhaust temperature areas; and
determining (S303), according to the percentages and the crystallization risk coefficients, the crystallization risk factor; and
activating (S103) a urea crystallization adaptive control strategy to enable a urea selective catalytic reduction, SCR, system to enter a urea crystallization active removing mode upon determining that the crystallization risk factor is greater than a preset threshold
wherein the activating (S103) a urea crystallization adaptive control strategy comprises:
raising an exhaust temperature of the engine.

2. The method according to claim 1, wherein the determining (S303), according to the percentages and the crystallization risk coefficients, the crystallization risk factor comprises:
determining, according to the percentages and the crystallization risk coefficients, the crystallization risk factor by

$$\eta = \sum_1^N \Lambda(k)M(k)$$

a formula , wherein $\eta$ represents the crystallization risk factor, $N$ represents the number of crystallization energy factor-exhaust temperature areas distributed, $\Lambda(k)$ represents a percentage of a crystallization energy factor-exhaust temperature value pair in a $k^{th}$ crystallization energy factor-exhaust temperature area, and $M(k)$ represents a crystallization risk coefficient corresponding to the $k^{th}$ crystallization energy factor-exhaust temperature area.

3. Apparatus for controlling urea crystallization (10), configured to perform a method according to claim 1 or 2, comprising:

an acquiring module (11), configured to acquire, according to a preset sampling interval, crystallization energy factors and exhaust temperatures of an operating area of an engine within a preset time period, and obtaining crystallization energy factor-exhaust temperature value pairs, wherein the crystallization energy factor is a ratio of energy provided by exhaust to urea solution to energy required for vaporization of the urea solution;
a processing module (12), configured to determine, according to the crystallization energy factor-exhaust temperature value pairs, a urea crystallization risk factor within the preset time period, wherein the urea crystallization risk factor is used to measure a possibility of forming the urea crystallization; and
a controlling module (13), configured to activate a urea crystallization adaptive control strategy and enable a urea selective catalytic reduction, SCR, system to move urea crystallization active upon determining that the crystallization risk factor is greater than a preset threshold;
wherein the processing module (12) is specifically configured to:

establish a hash map for a distribution of the crystallization energy factor-exhaust temperature value pairs; and
determine, according to the hash map, the urea crystallization risk factor within the preset time period;
wherein determine, according to the hash map, the urea crystallization risk factor within the preset time period comprises:

determine percentages of crystallization energy factor-exhaust temperature value pairs in different crystallization energy factor-exhaust temperature areas on the hash map;
acquire crystallization risk coefficients corresponding to the different crystallization energy factor-exhaust temperature areas; and
determine, according to the percentages and the crystallization risk coefficients, the crystallization risk factor.

4. A storage medium, wherein the storage medium is configured to store a computer program, and the computer program is configured to implement the method for controlling urea crystallization according to any one of claim 1 or 2.

5. An electronic device (20), comprising a memory (21) and a processor (22); the memory (21) is configured to store a computer program, and the processor (22) executes the computer program to implement the method for controlling urea crystallization according to any one of claim 1 or 2.

**Patentansprüche**

1. Verfahren zum Steuern der Harnstoffkristallisation, umfassend:
   Erfassen (S101) von Kristallisationsenergie-Faktoren und Abgastemperaturen eines Betriebsbereichs eines Motors innerhalb eines vorgegebenen Zeitraums gemäß einem vorgegebenen Abtastintervall und Erhalten von Kristallisationsenergie-Faktor-Abgastemperatur-Wertepaaren; wobei das Erfassen (S101) von Kristallisationsenergie-Faktoren und Abgastemperaturen eines Betriebsbereichs eines Motors innerhalb eines vorgegebenen Zeitraums gemäß einem vorgegebenen Abtastintervall und das Erhalten von Kristallisationsenergie-Faktor-Abgastemperatur-Wertepaaren umfasst:

   Erfassen (S401), gemäß dem voreingestellten Abtastintervall, der Abgastemperaturen des Betriebsbereichs des Motors innerhalb der voreingestellten Zeitperiode;
   Bestimmen (S403), gemäß den Abgastemperaturen, der Kristallisationsenergie-Faktoren; und
   Erzeugen (S404), gemäß den Abgastemperaturen und entsprechenden Kristallisationsenergie-Faktoren, der Kristallisationsenergie-Faktor-Abgastemperatur-Wertepaare,
   wobei vor dem Bestimmen (S403), gemäß den Abgastemperaturen, der Kristallisationsenergie-Faktoren das Verfahren ferner umfasst:

   Erfassen (S402) der Abgasströme des Motors, der Temperaturen der auf eine Wandoberfläche tropfenden Harnstofflösung, der Temperaturen der Harnstofflösung in einem Raum, der Massenströme der Harnstofflösung, der Temperatur der Harnstofflösung während der Einspritzung, der Temperatur der Harnstofflösung nach dem Wärmeaustausch und der latenten Verdampfungswärme der Harnstofflösung innerhalb des vorgegebenen Zeitraums entsprechend dem vorgegebenen Abtastintervall;
   wobei das Bestimmen (S403) der Kristallisationsenergiefaktoren entsprechend den Abgastemperaturen umfasst:

   Bestimmen der Kristallisationsenergiefaktoren in Abhängigkeit von den Abgastemperaturen durch eine

   $$E_r = \frac{\iint m_1 h(T_0 - T_1) d_i d_j + \iiint m_1 h(T_0 - T_2) d_i d_j d_k}{m_2 c(T_p - T_h) + m_2 L}$$

   Formel , wobei $E_r$ einen Kristallisations-Energiefaktor zum Zeitpunkt $t_1$, $m_1$ darstellt, einen Abgasstrom des Motors zum Zeitpunkt $t_1$ darstellt, $T_0$ eine Abgastemperatur des Motors zum Zeitpunkt $t_1$, darstellt, $T_1$ eine Temperatur der Harnstofflösung, die an einer Position ($d_i$, $d_j$) der Wandoberfläche zum Zeitpunkt $t_1$ tropft, darstellt, $T_2$ eine Temperatur der Harnstofflösung in einem Raum ($d_i$, $d_j$, $d_k$) zum Zeitpunkt $t_1$ darstellt, $m_2$ einen Massenstrom der Harnstofflösung zum Zeitpunkt $t_1$ darstellt, $T_p$ die Temperatur der Harnstofflösung während der Einspritzung darstellt, $T_h$ die Temperatur der Harnstofflösung nach dem Wärmeaustausch darstellt, $L$ die latente Verdampfungswärme der Harnstofflösung darstellt, $h$ eine Wärmekapazität des Abgases darstellt, und $c$ eine Wärmekapazität des Harnstoffs darstellt, $t_1$ eine bestimmte Abtastzeit innerhalb der voreingestellten Zeitperiode darstellt,
   Bestimmen (S102) eines Harnstoffkristallisations-Risikofaktors innerhalb der voreingestellten Zeitperiode gemäß den Kristallisationsenergie-Faktor-Abgastemperatur-Wertepaaren, wobei der Risikofaktor für die Harnstoffkristallisation verwendet wird, um eine Möglichkeit der Bildung der Harnstoffkristallisation zu messen, wobei das Bestimmen (S102) eines Risikofaktors für die Harnstoffkristallisation innerhalb des voreingestellten Zeitraums gemäß den Kristallisationsenergie-Faktor-Abgastemperatur-Wertepaaren umfasst:

   Erstellen (S201) einer Hash-Map für eine Verteilung der Kristallisationsenergie-Faktor-Abgastemperatur-Wertepaare; und

Bestimmen (S202) des Harnstoff-Kristallisations-Risikofaktors innerhalb des voreingestellten Zeitraums gemäß der Hash-Map, wobei das Bestimmen (S202) des Harnstoff-Kristallisations-Risikofaktors innerhalb des voreingestellten Zeitraums gemäß der Hash-Map Folgendes umfasst:

Bestimmen (S301) von Prozentsätzen von Kristallisationsenergie-Faktor-Abgastemperatur-Wertepaaren in verschiedenen Kristallisationsenergie-Faktor-Abgastemperatur-Bereichen auf der Hash-Karte;

Erfassen (S302) von Kristallisationsrisikokoeffizienten, die den verschiedenen Kristallisationsenergie-Faktor-Abgastemperatur-Bereichen entsprechen; und

Bestimmen (S303) des Kristallisationsrisikofaktors gemäß den Prozentsätzen und den Kristallisationsrisikokoeffizienten; und

Aktivieren (S103) einer adaptiven Steuerstrategie für die Harnstoffkristallisation, um ein System zur selektiven katalytischen Reduktion von Harnstoff (SCR) in die Lage zu versetzen, in einen aktiven Harnstoffkristallisations-Entfernungsmodus einzutreten, wenn festgestellt wird, dass der Kristallisationsrisikofaktor größer als ein voreingestellter Schwellenwert ist,

wobei das Aktivieren (S103) einer adaptiven Steuerstrategie für die Harnstoffkristallisation Folgendes umfasst:

Erhöhen einer Abgastemperatur des Motors.

2. Verfahren nach Anspruch 1, wobei das Bestimmen (S303) des Kristallisationsrisikofaktors gemäß den Prozentsätzen und den Kristallisationsrisikokoeffizienten umfasst:

Bestimmen des Kristallisationsrisikofaktors gemäß den Prozentsätzen und den Kristallisationsrisikokoeffizienten

durch eine Formel $\eta = \sum_{1}^{N} \Lambda(\mathrm{k})\mathrm{M}(\mathrm{k})$ , wobei $\eta$ den Kristallisationsrisikofaktor darstellt, $N$ die Anzahl der verteilten Kristallisationsenergiefaktor-Abgastemperatur-Bereiche darstellt, $\Lambda(k)$ einen Prozentsatz eines Kristallisationsenergiefaktor-Abgastemperatur-Wertepaares in einem $k^{th}$ Kristallisationsenergiefaktor-Abgastemperatur-Bereich darstellt und $M(k)$ einen Kristallisationsrisikokoeffizienten darstellt, der dem $k^{th}$ Kristallisationsenergiefaktor-Abgastemperatur-Bereich entspricht.

3. Vorrichtung zur Steuerung der Harnstoffkristallisation (10), die so konfiguriert ist, dass sie ein Verfahren nach Anspruch 1 oder 2 durchführt, umfassend:

ein Erfassungsmodul (11), das so konfiguriert ist, dass es gemäß einem voreingestellten Abtastintervall Kristallisationsenergie-Faktoren und Abgastemperaturen eines Betriebsbereichs eines Motors innerhalb einer voreingestellten Zeitspanne erfasst und Kristallisationsenergie-Faktor-Abgastemperatur-Wertepaare erhält, wobei der Kristallisationsenergie-Faktor ein Verhältnis der vom Abgas an die Harnstofflösung gelieferten Energie zur für die Verdampfung der Harnstofflösung erforderlichen Energie ist;

ein Verarbeitungsmodul (12), das so konfiguriert ist, dass es gemäß den Wertepaaren aus Kristallisationsenergiefaktor und Abgastemperatur einen Risikofaktor für die Harnstoffkristallisation innerhalb des voreingestellten Zeitraums bestimmt, wobei der Risikofaktor für die Harnstoffkristallisation verwendet wird, um eine Möglichkeit der Bildung der Harnstoffkristallisation zu messen; und

ein Steuermodul (13), das so konfiguriert ist, dass es eine adaptive Steuerstrategie für die Harnstoffkristallisation aktiviert und ein System zur selektiven katalytischen Reduktion von Harnstoff (SCR) in die Lage versetzt, die Harnstoffkristallisation aktiv zu schalten, wenn festgestellt wird, dass der Risikofaktor für die Kristallisation größer als ein voreingestellter Schwellenwert ist;

wobei das Verarbeitungsmodul (12) insbesondere so konfiguriert ist, dass es:

eine Hash-Map für eine Verteilung der Kristallisationsenergie-Faktor-Abgastemperatur-Wertepaare erstellt; und

den Harnstoff-Kristallisations-Risikofaktor innerhalb des voreingestellten Zeitraums, gemäß der Hash-Map, bestimmt;

wobei das Bestimmen, gemäß der Hash-Map, des Harnstoff-Kristallisations-Risikofaktors innerhalb des voreingestellten Zeitraums umfasst:

Bestimmen von Prozentsätzen von Kristallisationsenergie-Faktor-Abgastemperatur-Wertepaaren in verschiedenen Kristallisationsenergie-Faktor-Abgastemperatur-Bereichen auf der Hash-Map;
Erfassen von Kristallisationsrisikokoeffizienten, die den verschiedenen Kristallisationsenergie-Faktor-Abgastemperatur-Bereichen entsprechen; und
Bestimmen des Kristallisationsrisikofaktors gemäß den Prozentsätzen und den Kristallisationsrisikokoeffizienten.

4. Speichermedium, wobei das Speichermedium so konfiguriert ist, dass es ein Computerprogramm speichert, und das Computerprogramm so konfiguriert ist, dass es das Verfahren zur Steuerung der Harnstoffkristallisation gemäß einem der Ansprüche 1 oder 2 implementiert.

5. Elektronische Vorrichtung (20), die einen Speicher (21) und einen Prozessor (22) umfasst; der Speicher (21) ist so konfiguriert, dass er ein Computerprogramm speichert, und der Prozessor (22) führt das Computerprogramm aus, um das Verfahren zur Steuerung der Harnstoffkristallisation nach einem der Ansprüche 1 oder 2 zu implementieren.

**Revendications**

1. Procédé de régulation de cristallisation d'urée comprenant :
la saisie (S101), selon un intervalle d'échantillonnage prédéfini, de facteurs d'énergie de cristallisation et de températures d'échappement d'une zone de fonctionnement d'un moteur dans une période de temps prédéfinie, et l'obtention de paires de valeurs facteur d'énergie de cristallisation - température d'échappement ; en ce que la saisie (S101), selon une intervalle d'échantillonnage prédéfini, de facteurs d'énergie de cristallisation et de températures d'échappement d'une zone de fonctionnement d'un moteur dans une période de temps prédéfinie, et l'obtention de paires de valeurs facteur d'énergie de cristallisation - température d'échappement comprend :

la saisie (S401), selon l'intervalle d'échantillonnage prédéfini, des températures d'échappement de la zone de fonctionnement du moteur dans la période de temps prédéfinie ;
la détermination (S403), selon les températures d'échappement, des facteurs d'énergie de cristallisation ; et
la génération (S404), selon les températures d'échappement et les facteurs d'énergie de cristallisation correspondants, des paires de valeurs facteur d'énergie de cristallisation - température d'échappement,
avant la détermination (S403), selon les températures d'échappement, des facteurs d'énergie de cristallisation, le procédé comprenant en outre :

la saisie (S402), selon l'intervalle d'échantillonnage prédéfini, des flux d'échappement du moteur, des températures de la solution d'urée s'égouttant sur une surface de paroi, des températures de la solution d'urée dans un espace, des flux massiques de la solution d'urée, d'une température de la solution d'urée pendant l'injection, d'une température de la solution d'urée après échange de chaleur, et de la chaleur latente de vaporisation de la solution d'urée dans la période de temps prédéfinie ;
en conséquence, la détermination (S403), selon les températures d'échappement, des facteurs d'énergie de cristallisation comprend :

la détermination, selon les températures d'échappement, des facteurs d'énergie de cristallisation par une formule

$$E_r = \frac{\iint m_1 h(T_0 - T_1)d_i d_j + \iiint m_1 h(T_0 - T_2)d_i d_j d_k}{m_2 c(T_p - T_h) + m_2 L}$$

où $E_r$ représente un facteur d'énergie de cristallisation à un temps $t_1$, $m_1$ représente un flux d'échappement du moteur à un temps $t_1$, $T_0$ représente un température d'échappement du moteur à un temps $t_1$, $T_1$ représente une température de la solution d'urée s'égouttant à une position $(d_i, d_j)$ de la surface de paroi à un temps $t_1$, $T_2$ représente une température de la solution d'urée dans un espace $(d_i, d_j, d_k)$ à un temps $t_1$, $m_2$ représente un flux massique de la solution d'urée à un temps $t_1$, $T_p$ représente la température de la solution d'urée pendant l'injection, $T_h$ représente la température de la solution d'urée après échange de chaleur, $L$ représente la chaleur latente de vaporisation de la solution d'urée, $h$ représente une capacité calorifique d'échappement, et $c$ représente une capacité calorifique de l'urée, $t_1$ représente un certain temps d'échantillonnage dans la période de temps prédéfinie ;

la détermination (S102), selon les paires de valeurs facteur d'énergie de cristallisation - température d'échappement, d'un facteur de risque de cristallisation d'urée dans la période de temps prédéfinie, en ce que le facteur de risque de cristallisation d'urée est utilisé pour mesurer une possibilité de formation de la cristallisation d'urée, en ce que la détermination (S102), selon les paires de valeurs facteur d'énergie de cristallisation - température d'échappement, d'un facteur de risque de cristallisation d'urée dans la période de temps prédéfinie comprend :

l'établissement (S201) d'une carte de hachage pour une distribution des paires de valeurs facteur d'énergie de cristallisation - température d'échappement ; et
la détermination (S202), selon la carte de hachage, du facteur de risque de cristallisation d'urée dans la période de temps prédéfinie, en ce que la détermination (S202), selon la carte de hachage, du facteur de risque de cristallisation d'urée dans la période de temps prédéfinie comprend :

la détermination (S301) des pourcentages de paires de valeurs facteur d'énergie de cristallisation - température d'échappement dans différentes zones facteur d'énergie de cristallisation - température d'échappement sur la carte de hachage ;
la saisie (S302) des coefficients de risque de cristallisation correspondant aux différentes zones facteur d'énergie de cristallisation - température d'échappement ; et
la détermination (S303), selon les pourcentages et les coefficients de risque de cristallisation, du facteur de risque de cristallisation ; et
l'activation (S103) d'une stratégie de régulation adaptative de cristallisation d'urée pour permettre à un système de réduction catalytique sélective (RCS) d'urée d'entrer un mode d'élimination actif de cristallisation d'urée après avoir déterminé que le facteur de risque de cristallisation est supérieur à un seuil prédéfini,
en ce que l'activation (S103) d'une stratégie de régulation adaptative de cristallisation d'urée comprend :
l'augmentation d'une température d'échappement du moteur.

2. Procédé selon la revendication 1, en ce que la détermination (S303), selon les pourcentages et les coefficients de risque de cristallisation, du facteur de risque de cristallisation comprend :
la détermination, selon les pourcentages et les coefficients de risque de cristallisation, du facteur de risque de cristallisation par une formule

$$\eta = \sum_{1}^{N} \Lambda(\mathrm{k})\mathrm{M}(\mathrm{k})$$

où $\eta$ représente le facteur de risque de cristallisation, *N* représente le nombre de zones facteur d'énergie de cristallisation - température d'échappement distribué, $\Lambda(k)$ représente un pourcentage d'une paire de valeurs facteur d'énergie de cristallisation - température d'échappement dans une zone facteur d'énergie de cristallisation - température d'échappement k$^{th}$, et *M(k)* représente un coefficient de risque de cristallisation correspondant à la zone facteur d'énergie de cristallisation - température d'échappement k$^{th}$.

3. Appareil de régulation de cristallisation d'urée (10), conçu pour mettre en oeuvre un procédé selon la revendication 1 ou 2, comprenant :

un module de saisie (11) conçu pour la saisie, selon un intervalle d'échantillonnage prédéfini, des facteurs d'énergie de cristallisation et des températures d'échappement d'une zone de fonctionnement d'un moteur dans une période de temps prédéfinie, et l'obtention de paires de valeurs facteur d'énergie de cristallisation - température d'échappement, en ce que le facteur d'énergie de cristallisation est un rapport entre l'énergie fournie par l'échappement à la solution d'urée et l'énergie requise pour la vaporisation de la solution d'urée ;
un module de traitement (12) conçu pour déterminer, selon les paires de valeurs facteur d'énergie de cristallisation - température d'échappement, un facteur de risque de cristallisation d'urée dans la période de temps prédéfinie, en ce que le facteur de risque de cristallisation d'urée est utilisé pour mesurer une possibilité de formation de cristallisation d'urée ; et
un module de régulation (13) conçu pour activer une stratégie de régulation adaptative de cristallisation d'urée et permettre à un système de réduction catalytique sélective (RCS) d'urée d'activer la cristallisation d'urée après avoir déterminé que le facteur de risque de cristallisation est supérieur à un seuil prédéfini ;

en ce que le module de traitement (12) est conçu spécifiquement pour :

établir une carte de hachage pour une distribution des paires de valeur facteur d'énergie de cristallisation - température d'échappement ; et
déterminer, selon la carte de hachage, le facteur de risque de cristallisation d'urée dans la période de temps prédéfinie ;
en ce que la détermination, selon la carte de hachage, du facteur de risque de cristallisation d'urée dans la période de temps prédéfinie comprend :

la détermination des pourcentages des paires de valeurs facteur d'énergie de cristallisation - température d'échappement dans différentes zones facteur d'énergie de cristallisation - température d'échappement sur la carte de hachage ;
la saisie des coefficients de risque de cristallisation correspondant aux différentes zones facteur d'énergie de cristallisation - température d'échauffement ; et
la détermination, selon les pourcentages et les coefficients de risque de cristallisation, du facteur de risque de cristallisation.

4. Support de stockage, en ce que le support de stockage est conçu pour stocker un programme informatique, et le programme informatique est conçu pour mettre en oeuvre le procédé de régulation de cristallisation d'urée selon l'une des revendications 1 ou 2.

5. Dispositif électronique (20) comprenant une mémoire (21) et un processeur (22) ; la mémoire (21) est conçue pour stocker un programme informatique, et le processeur (22) exécute le programme informatique pour mettre en oeuvre le procédé de régulation de cristallisation d'urée selon l'une des revendications 1 ou 2.

FIG. 1

Acquiring, according to a preset sampling interval, crystallization energy factors and exhaust temperatures of an operating area of an engine within a preset time period, and obtaining crystallization energy factor-exhaust temperature value pairs — S101

Determining, according to the crystallization energy factor-exhaust temperature value pairs, a urea crystallization risk factor within the preset time period — S102

Activating a urea crystallization adaptive control strategy to enable a urea selective catalytic reduction (SCR) system to enter a urea crystallization active removing mode upon determining that the crystallization risk factor is greater than a preset threshold — S103

FIG. 2

Establishing a hash map for a distribution of the crystallization energy factor-exhaust temperature value pairs

S201

Determining, according to the hash map, the urea crystallization risk factor within the preset time period

S202

FIG. 3

FIG. 4

Determining percentages of the crystallization energy factor-exhaust temperature value pairs in different crystallization energy factor-exhaust temperature areas on the harsh map — S301

↓

Acquiring crystallization risk coefficients corresponding to the different crystallization energy factor-exhaust temperature areas — S302

↓

Determining, according to the percentages and the crystallization risk coefficients, the crystallization risk factor — S303

FIG. 5

Acquiring, according to the preset sampling interval, the exhaust temperatures of the operating area of the engine within the preset time period — S401

↓

Acquiring according to the preset sampling interval, exhaust flows of the engine, temperatures of urea solution dripping on a wall surface, temperatures of urea solution in a space, mass flows of urea solution, a temperature of the urea solution during injection, a temperature of the urea solution after heat exchange, and latent heat of vaporization of the urea solution within the preset time period — S402

↓

Determining, according to the exhaust temperatures, the crystallization energy factors — S403

↓

Generating, according to the exhaust temperatures and the corresponding crystallization energy factors, the crystallization energy factor-exhaust temperature value pairs — S404

FIG. 6

EP 3 842 625 B1

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109611185 B
- CN 108595802 A
- CN 106837498 B
- CN 106226085 B
- CN 103573358 B